# FASCICULE DE BREVET EUROPEEN

(11) **EP 0 681 307 B1**
(45) Date de publication et mention de la délivrance du brevet: **12.08.1998**
(21) Numéro de dépôt: 95401002.1
(22) Date de dépôt: 02.05.1995
(51) Int. Cl.: H01H 3/16, H01H 3/02

(54) **Dispositif de sécurité pour un élément électrique mobile et barbecue électrique équipé d'un tel dispositif**
Sicherheitsvorrichtung für ein elektrisches bewegliches Bauelement und Grill mit einer derartigen Vorrichtung
Security device for a mobile electric element and barbecue with such device

(30) Priorité: 06.05.1994 FR 9405618
(43) Date de publication de la demande: 08.11.1995
(60) Demande divisionnaire: 97110618.2
(73) Titulaire: SEB S.A., 21260 Selongey (FR)
(72) Inventeur: Betend-Bon, Alain, F-74000 Annecy (FR)
(74) Mandataire: Keib, Gérard

(56) Documents cités:
- WO-A-89/03582
- DE-A- 3 430 878
- FR-A- 2 069 677
- GB-A- 1 019 921

## Description

La présente invention concerne un dispositif de sécurité pour un élément électrique mobile, selon le préambule de la revendication 1 (voir par exemple FR-A-2 069 677).

Elle concerne également un barbecue électrique comprenant une résistance électrique équipé d'un tel dispositif.

De nombreux appareils possèdent des parties électriques qui sont amovibles afin de faciliter le nettoyage du corps de l'appareil. Il est important, pour assurer la sécurité de l'utilisateur, d'imposer la coupure de l'alimentation électrique de ces parties amovibles lorsqu'elles ne sont pas situées dans leur position normale d'utilisation. Cette exigence implique la mise en place d'un dispositif de sécurité qui empêche l'utilisateur de mettre en marche l'appareil lorsque les éléments électriques ne sont pas situés sur le corps de l'appareil.

On connaît dans la technique antérieure des dispositifs de sécurité montés entre les moyens d'alimentation en courant électrique et l'interrupteur de commande marche/arrêt des éléments électriques. De tels dispositifs imposent l'utilisation de deux interrupteurs montés en série, chacun de ces interrupteur étant commandé indépendamment, soit par l'utilisateur, soit par des moyens de détection de la position de l'élément électrique par rapport au corps de l'appareil.

Les dispositifs de sécurité actuels présentent donc l'inconvénient d'être coûteux à réaliser et d'augmenter les risques de panne de l'appareil électrique.

La présente invention a pour objet de résoudre les inconvénients précités et de proposer un dispositif de sécurité peu coûteux tout en assurant une bonne protection de l'utilisateur.

Le dispositif de sécurité visé par l'invention est prévu pour un élément électrique mobile par rapport à des moyens complémentaires coopérant en fonctionnement avec l'élément électrique dans une position rapprochée, et comprend des moyens de commande du fonctionnement de l'élément électrique entre une position de marche et une position d'arrêt et des moyens de détection de la position rapprochée ou éloignée de l'élément électrique par rapport aux moyens complémentaires.

Selon l'invention, le dispositif de sécurité comprend un interrupteur unique adapté à être actionné entre une position de connexion, dans laquelle l'élément électrique est connecté à des moyens d'alimentation en courant électrique, et une position de déconnexion, dans laquelle l'élément électrique est déconnecté des moyens d'alimentation électrique, l'interrupteur étant actionné en position de déconnexion si lesdits moyens de commande sont en position d'arrêt ou si les moyens de détection détectent la position éloignée de l'élément électrique par rapport aux moyens complémentaires.

Ainsi, grâce à l'invention un seul interrupteur est commandé à la fois par des moyens de commande marche/arrêt de l'appareil et des moyens de détection de la position de l'élément électrique par rapport à cet appareil. La mise en route des moyens électriques ne peut être réalisée que si les moyens de commande sont en position de marche et si l'élément électrique est en position normale d'utilisation.

Le dispositif conforme à l'invention est donc d'une grande sécurité pour l'utilisateur dans la mesure où il est nécessaire d'exercer une double action sur l'interrupteur pour établir la connexion de l'élément électrique avec les moyens d'alimentation en courant électrique

Selon une version avantageuse de l'invention, l'interrupteur comprend un contacteur en saillie dans la position de déconnexion et en position escamotée dans la position de connexion. Des moyens formant levier sont disposés devant le contacteur et sont adaptés à déplacer le contacteur en position escamotée lorsque les moyens de commande sont en position de marche et lorsque les moyens de détection détectent la position rapprochée de l'élément électrique par rapport aux moyens complémentaires.

Les moyens de commande et les moyens de détection actionnent donc, par l'intermédiaire des moyens formant levier, un même contacteur.

Selon un autre aspect de l'invention, un barbecue électrique comprend une embase et une résistance électrique montée de manière amovible sur cette embase.

Conformément à l'invention, un dispositif de sécurité tel que décrit ci-dessus équipe la résistance électrique, les moyens complémentaires étant constitués par l'embase.

Par conséquent, dès que la résistance électrique est retirée de l'embase, pour faciliter le nettoyage de celle-ci par exemple, le dispositif de sécurité conforme à l'invention empêche la mise en route de la résistance électrique et protège ainsi parfaitement l'utilisateur.

D'autres avantages et particularités de l'invention apparaîtront encore dans la description ci-après.

Aux dessins annexés donnés à titre d'exemples non limitatifs :
- la figure 1 est une vue en perspective d'un barbecue électrique conforme à l'invention ;
- la figure 2 est une vue en perspective d'une résistance électrique équipée d'un dispositif de sécurité conforme à l'invention ;
- les figures 3A, 3B, 3C et 3D sont des vue schématiques illustrant le fonctionnement d'un dispositif de sécurité conforme à une première forme de réalisation de l'invention ;
- la figure 4 est une vue schématique d'un dispositif de sécurité selon un deuxième mode de réalisation de l'invention ;
- la figure 5 est une vue schématique d'un dispositif de sécurité selon un troisième mode de réalisation de l'invention ; et
- la figure 6 est une vue schématique d'un dispositif de sécurité selon un quatrième mode de réalisation de l'invention.

Afin de mieux comprendre l'invention, on va décrire l'application du dispositif de sécurité à un barbecue électrique, cet exemple n'étant donné qu'à titre d'illustration.

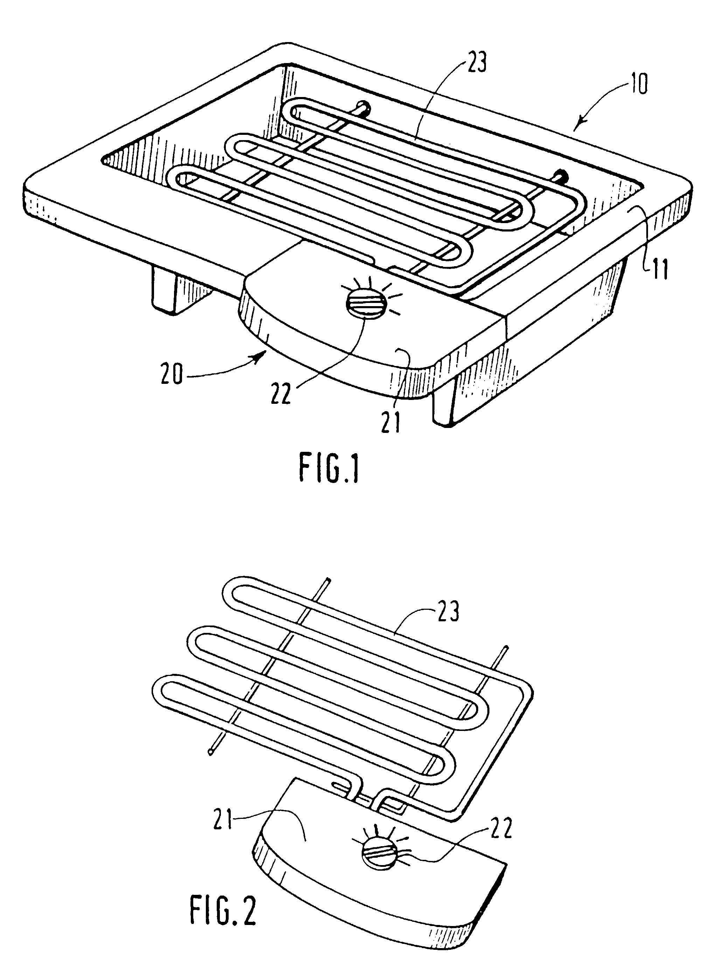

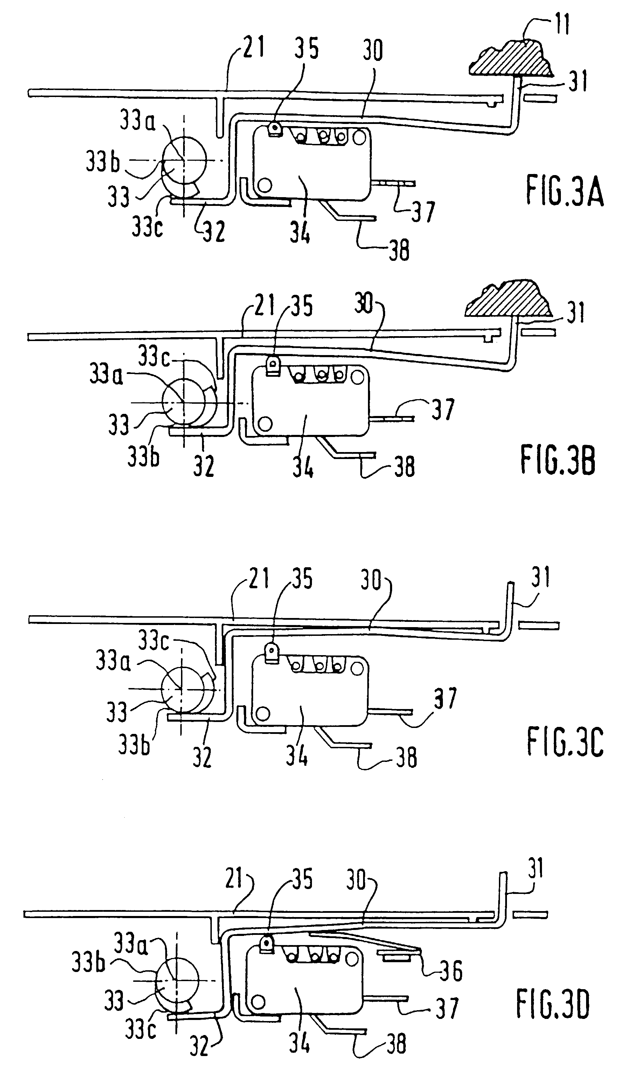

En référence tout d'abord à la figure 1, un barbecue électrique 10 comprend une embase 11 et une résistance électrique 23 montée de manière amovible sur cette embase 11.

Dans un tel appareil, il est très avantageux de pouvoir retirer la résistance électrique pour faciliter le nettoyage de l'embase 11.

Un dispositif de sécurité, tel qu'il sera décrit ci-après en détail, équipe la résistance électrique 23. L'ensemble du dispositif de sécurité 20 est logé dans un boîtier 21. Celui-ci peut être en plastique ou en aluminium.

Comme mieux représenté à la figure 2, la résistance électrique 23 et le dispositif de sécurité 20 sont amovibles par rapport au reste de l'appareil et notamment de l'embase 11.

En référence tout d'abord à la figure 3A, on va décrire la structure du dispositif de sécurité conforme à un premier mode de réalisation de l'invention.

Ce dispositif de sécurité comprend des moyens de commande 33 du fonctionnement de l'élément électrique 23 entre une position de marche et une position d'arrêt. Il comprend également des moyens de détection 31 adaptés à détecter la position rapprochée ou éloignée de l'élément électrique 23 par rapport aux moyens complémentaires 11.

Conformément à l'invention, ce dispositif de sécurité comprend un interrupteur unique 34 adapté à être actionné entre une position de connexion et une position de déconnexion.

De manière connue, des conducteurs électriques 37, 38 permettent d'alimenter en courant l'élément électrique à partir d'une source de courant non représentée.

L'interrupteur 34 comprend un contacteur 35 en saillie dans la position de déconnexion et én position escamotée dans la position de connexion.

Le contacteur 35 est maintenu en saillie grâce à un moyen de rappel élastique.

Des moyens formant levier 30 sont disposés devant ce contacteur 35 et sont adaptés à déplacer le contacteur 35 en position escamotée si et seulement si les moyens de commande 33 sont en position de marche et les moyens de détection 31 détectent la position rapprochée de l'élément électrique 23 par rapport à des moyens complémentaires 11. Ces derniers peuvent être constitués par l'embase 11 du barbecue tel qu'illustré à la figure 1.

Les moyens de commande 33 et les moyens de détection 31 sont adaptés à déplacer respectivement une extrémité 32, 31 des moyens formant levier 30.

Les moyens de détection 31 sont constitués d'une extrémité 31 des moyens formant levier 30, cette extrémité 31 étant déplacée par les moyens complémentaires 11 lorsque l'élément électrique 23 est dans la position rapprochée par rapport aux moyens complémentaires 11.

Ainsi, lorsque l'élément électrique 23 est en position de fonctionnement, les moyens complémentaires 11 sont en contact avec l'extrémité 31 des moyens formant levier 30 et repoussent celle-ci de manière à déplacer les moyens formant levier 30 vers le contacteur 35 de l'interrupteur 34.

Les moyens de commande 33 sont constitués d'une came rotative autour d'un axe de rotation 33a. Cette came 33 a une première portion périphérique 33b en contact avec une extrémité 32 des moyens formant levier 30 lorsque les moyens de commande 33 sont en position d'arrêt. Une seconde portion périphérique 33c, située à une distance de l'axe de rotation 33a supérieure à la distance séparant la première portion périphérique 33b de l'axe de rotation 33a, est en contact avec l'extrémité 32 des moyens formant levier 30 lorsque les moyens de commande 33 sont en position de marche.

Ces moyens de commande 33 peuvent être actionnés manuellement par l'utilisateur par le biais d'un bouton de commande 22 illustré à la figure 1, placé sur le boîtier 21 dans lequel est logé l'ensemble du dispositif de sécurité 20.

Ces moyens de commande 33 peuvent également être constitués d'un curseur en translation ou de tout autre moyen mobile de réglage.

Le fonctionnement de ce dispositif de sécurité décrit ci-dessus va maintenant être expliqué en référence aux figures 3A, 3B, 3C et 3D, pour une résistance électrique équipant un barbecue.

La figure 3A représente le dispositif de sécurité lorsque la résistance électrique 23 est en marche, c'est-à-dire alimentée en courant.

Les extrémités 31 et 32 des moyens formant levier 30 sont repoussés à la fois par l'embase 11 et par-une partie 33c de la came 33, éloignée de l'axe de rotation 33a de cette came 33.

Ainsi les moyens formant levier 30 sont maintenus dans une position dans laquelle le contacteur 35 est dans sa position escamotée.

La figure 3B illustre le dispositif de sécurité 20 lorsque la résistance électrique 23 est en position de fonctionnement dans l'appareil tout en étant à l'arrêt. La came 33 est alors dans une position dans laquelle une partie périphérique 33b, proche de l'axe de rotation 33a, est en contact avec l'extrémité 32 des moyens formant levier 30. La came 33 n'exerce plus de poussée sur l'extrémité 32 et le contacteur 35 est en saillie, l'interrupteur 34 interrompant ainsi l'alimentation en courant de la résistance électrique 23.

Les figures 3C et 3D illustrent le fonctionnement du dispositif de sécurité 20 lorsque la résistance électrique 23 n'est pas en position de fonctionnement sur l'embase 11 du barbecue 10.

A la figure 3C, les moyens de commande 33 sont à l'arrêt et aucune action n'est exercée sur les extrémités 31 et 32 des moyens formant levier 30 et le contacteur 35 demeure en saillie, l'interrupteur 34 étant ainsi dans sa position de déconnexion.

A la figure 3D, les moyens de commande 33 sont en position de marche, une portion 33c, éloignée de l'axe de rotation 33a de la came 33, étant en contact avec l'extrémité 32 des moyens formant levier 30. Ce cas de figure peut se produire lorsque l'utilisateur a actionné malencontreusement le bouton de commande 22 bien que la résistance électrique 23 ne soit pas en place dans le barbecue 10.

L'extrémité 31 des moyens formant levier 30 n'étant pas en contact avec l'embase 11 de l'appareil 10, les moyens formant levier n'exercent pas de pression sur le contacteur 35 et ce dernier demeure en saillie. Aucun courant n'alimente ainsi la résistance électrique 23, évitant tout risque de brûlure de l'utilisateur ou d'accident.

L'exemple de réalisation décrit ci-dessus présente l'avantage d'utiliser des moyens de commande 33 et des moyens de détection 31 qui doivent avoir une action positive sur les extrémités 31 et 32 des moyens formant levier 30 pour que la résistance électrique 23 puisse être alimentée en courant.

Comme illustré à la figure 3D, le dispositif de sécurité 20 peut également comprendre des moyens formant ressort 36 permettant de rappeler les moyens formant levier 30 dans une position éloignée du contacteur 35. Cependant, ces moyens formant ressort 36 peuvent être superflus dans les cas où les moyens formant levier 30 sont suffisamment élastiques pour revenir dans une position éloignée du contacteur 35.

Ainsi, conformément à l'invention, l'interrupteur 34 est adapté à connecter une résistance électrique 23 des moyens d'alimentation électrique si et seulement si cette résistance est en position de fonctionnement dans l'appareil et les moyens de commande 33 sont en position de marche.

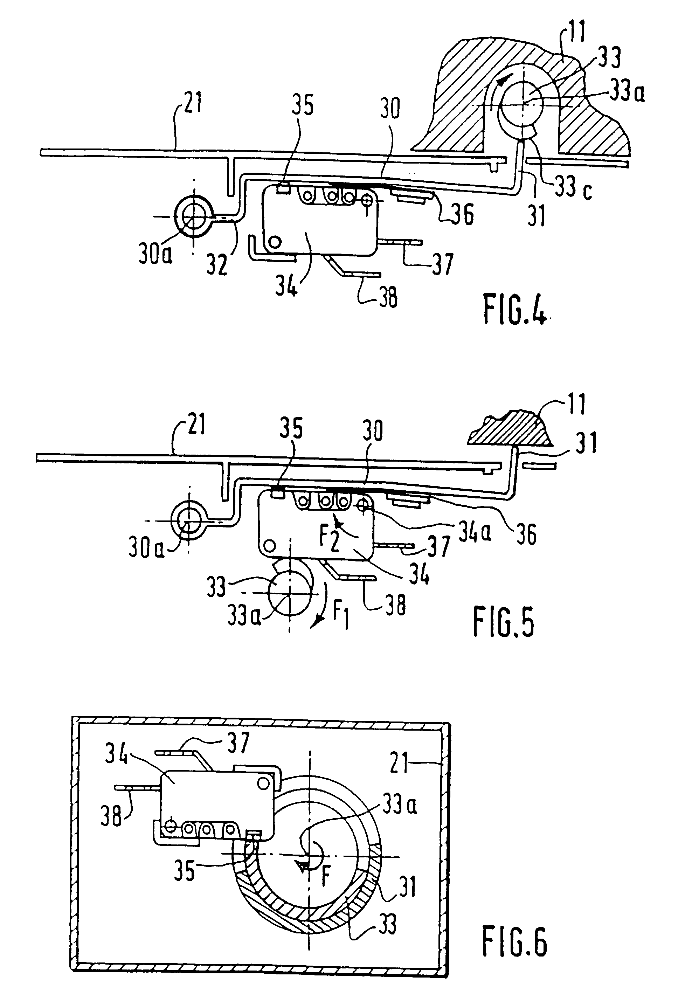

D'autres exemples de réalisation vont être décrits ci-après en référence aux figures 4 à 6.

Les éléments communs avec l'exemple de réalisation précédent portent les mêmes références sur les figures et ne seront pas redécrits.

A la figure 4, les moyens de commande 33 et les moyens de détection 31 sont adaptés à déplacer une même extrémité 31 des moyens formant levier 30.

L'autre extrémité 32 du levier 30 est monté en rotation sur un axe de pivotement 30a.

Les moyens de commande 33 sont constitués d'une came rotative 33 qui est montée directement sur le corps de l'appareil 11 et non plus sur le boîtier 21.

Le contacteur 35 de l'interrupteur 34 est en position de connexion seulement lorsque la portion 33c la plus éloignée de l'axe de rotation 33a de la came 33 est en contact avec l'extrémité 31 du levier 30.

Dans l'exemple de réalisation illustré à la figure 5, les moyens de commande 33 sont adaptés à déplacer l'interrupteur 34 autour d'un axe de pivotement 34a entre une position éloignée des moyens formant levier 30 lorsque les moyens de commande 33 sont en position d'arrêt, et une position rapprochée des moyens formant levier 30 lorsque les moyens de commande 33 sont en position de marche.

Pour que le contacteur 35 soit en position escamotée, il est nécessaire à la fois que l'extrémité 31 du levier 30 soit déplacée vers l'interrupteur 34 par les moyens complémentaires 11 et que la came rotative 33 formant les moyens de commande 33 soit pivotée en position de marche, dans le sens de la flèche F1 à la figure 5, de manière à faire pivoter l'interrupteur 34 vers le levier 30 dans le sens de la flèche F2.

Dans l'exemple de réalisation illustré à la figure 6, les moyens de détection 31 sont constitués d'une première came 31 et les moyens de commande 33 sont constitués d'une seconde came 33.

Ces deux cames 31 et 33 sont concentriques et sont solidaires en rotation autour d'un axe 33a.

Une action en rotation sur la came 33 peut être réalisée au moyen d'une rampe solidaire de l'embase 11 du barbecue.

La came 31 est de manière classique solidaire d'un bouton de commande manuelle faisant saillie sur le boîtier 21.

En fonctionnement, lorsque l'utilisateur place l'élément électrique équipé du dispositif de sécurité sur l'embase 11, des moyens complémentaires tels qu'une rampe ont une action sur la came 31 et déplacent les deux cames 31 et 33 d'un angle prédéterminé, de l'ordre de 15° environ dans le sens de la flèche F, à l'encontre de la force de rappel d'un ressort.

Ensuite, lorsque l'utilisateur tourne le bouton de commande, également suivant la flèche F, les cames 31 et 33 sont pivotées d'un angle supplémentaire, de sorte que la came 33 vienne en appui sur le contacteur 35 de l'interrupteur 34 et permette ainsi la mise en marche de l'élément électrique.

Lorsque l'élément électrique n'est pas en place sur l'embase 11, la force de rappel du ressort précité entraîne en rotation, dans le sens opposé à la flèche F, les deux cames 31 et 33.

Lorsque l'utilisateur agit sur le bouton de commande solidaire de la came 33, il entraîne en rotation les cames 31 et 33 dans le sens de la flèche F selon un déplacement angulaire maximum.

Ce dernier est prédéterminé de manière à arrêter le déplacement de la came 33 avant que cette dernière ne soit en contact avec le contacteur 35 de l'interrupteur 34.

La mise en marche de l'interrupteur 34 ne peut ainsi être obtenue que lorsqu'il y a une rotation combinée des cames 31 et 33 par l'intermédiaire de la rampe solidaire de l'embase 11 et du bouton de commande.

Bien entendu, de nombreuses modifications peuvent être apportées aux exemples de réalisation décrits ci-dessus sans sortir du cadre de l'invention telle que définie dans les revendications.

Ainsi, le dispositif de sécurité pourrait être monté sur une partie comprenant un moteur électrique par exemple, adapté à entraîner en mouvement des éléments tels que des lames d'un hachoir, des fouets d'un batteur, ne permettant la mise en route du moteur que si les éléments cités ci-dessus sont en place.

L'élément électrique peut également n'être que mobile entre une position de fonctionnement et une position de non fonctionnement, sans être pour autant amovible.

Dans l'exemple de réalisation décrit à la figure 3A, les moyens de détection 31 sont constitués par une extrémité 31 des moyens formant levier 30, cette extrémité 31 faisant saillie hors du boîtier 21 dans lequel est logé l'ensemble du dispositif de sécurité.

De la même manière, l'embase 11 pourrait comporter une portion faisant saillie, le boîtier 21 comportant une ouverture en regard de cette portion en saillie de l'embase 11 de sorte que cette dernière puisse pénétrer à l'intérieur du boîtier 21 pour repousser l'extrémité 31 des moyens formant levier 30. Dans cette réalisation, aucun élément ne ferait saillie du boîtier 21 logeant l'ensemble du dispositif 20, évitant ainsi que l'utilisateur puisse par mégarde appuyer sur l'extrémité 31 en saillie, risquant ainsi de placer l'interrupteur en position de connexion.

## Revendications

1. Dispositif de sécurité pour un élément électrique mobile (23) par rapport à des moyens complémentaires (11) coopérant en fonctionnement avec l'élément électrique (23) dans une position rapprochée, comprenant des moyens de commande (33) du fonctionnement de l'élément électrique (23) entre une position de marche et une position d'arrêt, des moyens de détection (31) de la position rapprochée ou éloignée de l'élément électrique (23) par rapport aux moyens complémentaires (11), et un interrupteur unique (34) adapté à être actionné entre une position de connexion, dans laquelle l'élément électrique (23) est connecté à des moyens d'alimentation en courant électrique, et une position de déconnexion, dans laquelle l'élément électrique (23) est déconnecté des moyens d'alimentation électrique, caractérisé en ce que l'interrupteur (34) comprend un contacteur (35) en saillie dans ladite position de déconnexion et en position escamotée dans ladite position de connexion et en ce que des moyens formant levier (30) sont disposés devant ledit contacteur (35) et sont adaptés à déplacer le contacteur (35) en position escamotée lorsque les moyens de commande (33) sont en position de marche et lorsque les moyens de détection (31) détectent la position rapprochée de l'élément électrique (23) par rapport aux moyens complémentaires (11), les moyens de détection (31) étant constitués d'une extrémité (31) des moyens formant levier (30), les moyens complémentaires (11) étant adaptés à repousser ladite extrémité (31) des moyens formant levier (30) de manière à déplacer les moyens formant levier (30) en direction du contacteur (35) de l'interrupteur (34).

2. Dispositif conforme à la revendication 1, caractérisé en ce que les moyens de commande (33) et les moyens complémentaires (11) sont adaptés à déplacer respectivement une extrémité (32, 31) des moyens formant levier (30).

3. Dispositif conforme à l'une des revendications 1 ou 2, caractérisé en ce que les moyens de commande (33) sont constitués d'une came rotative autour d'un axe de rotation (33a), ayant une première portion périphérique (33b) en contact avec une extrémité (32) des moyens formant levier (30) lorsque les moyens de commande (33) sont en position d'arrêt, et une seconde portion périphérique (33c), à une distance de l'axe de rotation (33a) supérieure à la distance séparant la première portion périphérique (33) de l'axe de rotation (33a), en contact avec l'extrémité (32) des moyens formant levier (30) lorsque les moyens de commande (33) sont en position de marche.

4. Dispositif conforme à la revendication 1, caractérisé en ce que les moyens de commande (33) et les moyens complémentaires (11) sont adaptés à déplacer une même extrémité (31) des moyens formant levier (30).

5. Dispositif conforme à la revendication 1 caractérisé en ce que les moyens de commande (33) sont adaptés à déplacer l'interrupteur (34) autour d'un axe de pivotement (34a) entre une position éloignée des moyens formant levier (30) lorsque les moyens de commande (33) sont en position d'arrêt et une position rapprochée des moyens formant levier (30) lorsque les moyens de commande (33) sont en position de marche.

6. Dispositif de sécurité conforme à l'une des revendications 1 à 5, caractérisé en ce qu'il est logé dans un boîtier (21).

7. Dispositif de sécurité conforme à l'une des revendications 1 à 6, caractérisé en ce que l'interrupteur (34) est adapté à connecter ou déconnecter une résistance électrique (23) et des moyens d'alimentation électrique.

8. Dispositif de sécurité conforme à l'une des revendications 1 à 7, caractérisé en ce que l'élément électrique (23) est amovible.

9. Barbecue électrique comprenant une embase et une résistance électrique (23) montée de manière amovible sur l'embase (11), caractérisé en ce qu'un dispositif de sécurité (20) conforme à l'une des revendications 1 à 8 équipe la résistance électrique (23), lesdits moyens complémentaires (11) étant constitués par ladite embase (11).

## Patentansprüche

1. Sicherheitsvorrichtung für ein elektrisches Element (23), das beweglich bezüglich Ergänzungsvorrichtungen (11) ist, die im Betrieb mit dem elektrischen Element (23) in einer nahen Position zusammenwirken, wobei die Vorrichtung Betriebssteuervorrichtungen (33) für das elektrische Element (23) zwischen einer Betriebsstellung und einer Ruhestellung, Vorrichtungen zur Erfassung (31) der nahen oder entfernten Position des elektrischen Elementes (23) bezüglich der Ergänzungsvorrichtungen (11) und einen Hauptschalter (34) aufweist, der dafür eingerichtet ist, zwischen einer Anschlußposition, in der das elektrische Element (23) an elektrische Stromversorgungsvorrichtungen angeschlossen ist, und einer Abschaltposition, in der das elektrische Element (23) nicht an die Stromversorgungsvorrichtungen angeschlossen ist, betätigt zu werden, dadurch gekennzeichnet, daß der Schalter (34) ein Schütz (35) in vorspringender Stellung in der Abschaltposition und in eingezogener Stellung in der Anschlußposition aufweist, und daß die hebelbildenden Vorrichtungen (30) vor dem Schütz (35) angeordnet und dafür eingerichtet sind, das Schütz (35) in eingezogener Stellung zu verschieben, wenn die Steuervorrichtungen (33) in Betriebsstellung sind, und die Erfassungsvorrichtungen (31) die nahe Position des elektrischen Elementes (23) bezüglich der Ergänzungsvorrichtungen (11) erfassen, wobei die Erfassungsvorrichtungen (31) von einem Ende (31) der hebelbildenden Vorrichtungen (30) gebildet sind, wobei die Ergänzungsvorrichtungen dafür eingerichtet sind, das Ende (31) der hebelbildenden Vorrichtungen (30) derart zurückzudrücken, daß die hebelbildenden Vorrichtungen in Richtung des Schützes (35) des Schalters (34) verschoben werden.

2. Vorrichtung gemäß Anspruch 1, dadurch gekennzeichnet, daß die Steuervorrichtungen (33) und die Ergänzungsvorrichtungen (11) dafür eingerichtet sind, jeweils ein Ende (32, 31) der hebelbildenden Vorrichtungen (30) zu verschieben.

3. Vorrichtung gemäß einem der Ansprüche 1 oder 2, dadurch gekennzeichnet, daß die Steuervorrichtungen (33) von einer um eine Drehachse (33a) drehbaren Nocke gebildet sind, die einen ersten Umfangsbereich (33b) in Kontakt mit einem Ende (32) der hebelbildenden Vorrichtungen (30) aufweist, wenn die Steuervorrichtungen (33) in Ruhestellung sind, und einen zweiten Umfangsbereich (33c) hat, der mit einem größeren Abstand zu der Drehachse (33a) angeordnet ist als der Abstand, der den ersten Umfangsbereich (33) von der Drehachse (33a) trennt, und der in Kontakt mit dem Ende (32) der hebelbildenden Vorrichtungen (30) ist, wenn die Steuervorrichtungen (33) in Betriebsstellung sind.

4. Vorrichtung gemäß Anspruch 1, dadurch gekennzeichnet, daß die Steuervorrichtungen (33) und die Ergänzungsvorrichtungen (11) dafür eingerichtet sind, dasselbe Ende (31) der hebelbildenden Vorrichtungen (30) zu verschieben.

5. Vorrichtung gemäß Anspruch 1, dadurch gekennzeichnet, daß die Steuervorrichtungen (33) dafür eingerichtet sind, den Schalter (34) um eine Schwenkachse (34a) zwischen einer von den hebelbildenden Vorrichtungen entfernten Position (30), wenn die Steuervorrichtungen (33) in Ruhestellung sind, und einer den hebelbildenden Vorrichtungen (30) nahen Position, wenn die Steuervorrichtungen (33) in Betriebsstellung sind, zu verschieben.

6. Sicherheitsvorrichtung gemäß einem der Ansprüche 1 bis 5, dadurch gekennzeichnet, daß sie in einem Gehäuse (21) angeordnet ist.

7. Sicherheitsvorrichtung gemäß einem der Ansprüche 1 bis 6, dadurch gekennzeichnet, daß der Schalter (34) dafür eingerichtet ist, einen elektrischen Widerstand (23) an elektrische Versorgungseinrichtungen anzuschließen oder von ihnen zu trennen.

8. Sicherheitsvorrichtung gemäß einem der Ansprüche 1 bis 7, dadurch gekennzeichnet, daß das elektrische Element (23) abnehmbar ist.

9. Elektrischer Grill mit einer Befestigungsfläche und einem elektrischen Widerstand (23), der abnehmbar auf der Befestigungsfläche (11) angebracht ist, dadurch gekennzeichnet, daß eine Sicherheitsvorrichtung (20) gemäß einem der Ansprüche 1 bis 8 den Widerstand (23) ausrüstet, wobei die Ergänzungsvorrichtungen (11) von der Befestigungsfläche (1) gebildet sind.

## Claims

1. A safety device for an electric element (23) which is movable with respect to complementary means (11) cooperating in operation with the electric element (23) in a close position, comprising means (33) for controlling the operation of the electric element (23) between an on position and an off position, means (31) for detecting the close or distant position of the electric element (23) with respect to the complementary means (11), and a single switch (34) adapted to be actuated between a connecting position in which the electric element (23) is connected to electric current supply means, and a disconnection position in which the electric element (23) is disconnected from the electric supply means, characterised in that the switch (34) comprises a contactor (35) projecting in the said disconnection position and retracted in the said connection position and in that lever means (30) are disposed in front of the said contactor (35) and are adapted to move the contactor (35) in the retracted position when the control means (33) are in the on position and when the detection means (31) detect the close position of the electric element (23) with respect to the complementary means (11), the detection means (31) comprising one end (31) of the lever means (30), the complementary means (11) being adapted to push back the said end (31) of the lever means (30) so as to move the lever means (30) in the direction of the contactor (35) of the switch (34).

2. A device according to claim 1, characterised in that the control means (33) and the complementary means (11) are adapted to move one end (32, 31) respectively of the lever means (30).

3. A device according to claim 1 or 2, characterised in that the control means (33) comprise a cam rotatable about an axis of rotation (33a), having a first peripheral portion (33b) in contact with one end (32) of the lever means (30) when the control means (33) are in the off position, and a second peripheral portion (33c) at a distance from the axis of rotation (33a) greater than the distance separating the first peripheral portion (33) from the axis of rotation (33a), in contact with the end (32) of the lever means (30) when the control means (33) are in the on position.

4. A device according to claim 1, characterised in that the control means (33) and the complementary means (11) are adapted to move one and the same end (31) of the lever means (30).

5. A device according to claim 1, characterised in that the control means (33) are adapted to move the switch (34) about a pivot axis (34a) between a position distant from the lever means (30) when the control means (33) are in the off position and a position close to the lever means (30) when the control means (33) are in the on position.

6. A safety device according to any one of claims 1 to 5, characterised in that it is housed in a casing (21).

7. A safety device according to any one of claims 1 to 6, characterised in that the switch (34) is adapted to connect or disconnect an electric resistance (23) and electric power supply means.

8. A safety device according to any one of claims 1 to 7, characterised in that the electric element (23) is detachable.

9. An electric barbecue comprising a base and an electric resistance (23) mounted detachably on the base (11), characterised in that the electric resistance (23) is provided with a safety device (20) according to any one of claims 1 to 8, the said complementary means (11) being formed by the said base (11).
